# EUROPÄISCHE PATENTSCHRIFT

(11) **EP 2 250 354 B1**
(45) Veröffentlichungstag und Bekanntmachung des Hinweises auf die Patenterteilung: **10.04.2013**
(21) Anmeldenummer: 09716122.8
(22) Anmeldetag: 06.02.2009
(51) Int. Cl.: F01N 3/28

(54) **WABENKÖRPER MIT FLEXIBLEN VERBINDUNGSSTELLEN**
CELLULAR COMPONENT WITH FLEXIBLE CONNECTING POINTS
ÉLÉMENT ALVÉOLAIRE POURVU D'EMPLACEMENTS DE LIAISON FLEXIBLES

(30) Priorität: 27.02.2008 DE 102008011261
(43) Veröffentlichungstag der Anmeldung: 17.11.2010
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HIRTH, Peter, 51503 Rösrath (DE); ALTHÖFER, Kait, 51674 Wiehl (DE); MAUS, Wolfgang, 51429 Bergisch Gladbach (DE)
(74) Vertreter: Rössler, Matthias
(86) Internationale Anmeldenummer: PCT/EP2009/051408
(87) Internationale Veröffentlichungsnummer: WO 2009/106418

(56) Entgegenhaltungen:
- EP-A- 0 220 468
- DE-A1-102004 058 285

## Beschreibung

Die vorliegende Erfindung betrifft einen Wabenkörper mit einer Vielzahl von Kanälen, der mit zumindest einer wenigstens teilweise strukturierten Blechfolie gebildet ist. Die Blechfolien haben dabei eine Verlaufsrichtung und sind mit sich selbst oder zumindest einer weiteren glatten oder strukturierten Blechfolie über Verbindungsstellen aneinander fixiert. Solche Wabenkörper finden insbesondere als Katalysator-Trägerkörper in Abgassystemen mobiler Verbrennungskraftmaschinen Anwendung.

Wabenkörper bei der Abgasreinigung von Verbrennungskraftmaschinen, wie beispielsweise Diesel- oder Otto-Motoren, haben den Vorteil einer besonders großen Oberfläche, so dass ein sehr inniger Kontakt des ihn durchströmenden Abgasstromes an den Kanalwänden gewährleistet ist. Diese Oberfläche, die grundsätzlich von den Kanalwänden gebildet ist, wird regelmäßig mit geeigneten, gegebenenfalls verschiedenen, Katalysatoren beschichtet, um eine Konvertierung von im Abgas enthaltenen Schadstoffen zu ermöglichen.

Solche Wabenkörper können grundsätzlich aus keramischem oder metallischem Material gefertigt sein. In der letzten Zeit hat sich jedoch der metallische Katalysator-Trägerkörper besonders hervorgetan, da hier mit sehr dünnen Materialien, z. B. Blechfolien mit einer Dicke kleiner 50 µm oder sogar kleiner 30 µm, gearbeitet werden kann. Damit einher gehen eine sehr große geometrische Oberfläche und ein signifikant geringerer Druckverlust des Abgasstroms beim Durchströmen des Wabenkörpers im Vergleich zu keramischen Trägerstrukturen. Als weiterer Vorteil kann angesehen werden, dass hier gleichermaßen eine sehr einfache Anbindung an das übrige Abgassystem (z. B. Abgasrohr) ermöglicht ist, weil jeweils metallische Materialien miteinander kombiniert werden.

Eine solche Wabenstruktur ist jedoch in ihrem Lebenszyklus in einem mobilen Abgassystem einer Vielzahl unterschiedlicher Belastungen unterworfen. Dabei ist auch zu berücksichtigen, dass gerade die Superposition dieser teilweise extremen Belastungen nachhaltig die Dauerhaltbarkeit solcher Wabenkörper beeinflusst. So kann als thermische Belastung, wie beispielsweise die extremen Temperaturspitzen (bis oberhalb von 1.000°C), die beachtliche Temperaturänderungsgeschwindigkeit beim Aufheizen und Abkühlen sowie die Temperaturverteilung des anströmenden Abgasstromes ein wesentlicher Faktor sein. Gleichermaßen gilt dies im Hinblick auf die mechanische Belastung, nämlich beispielsweise bezüglich des maximalen Beschleunigungspegels, des Frequenzbereichs der Anregung im Hinblick auf die Eigenfrequenzen sowie auch die gasdynamische Belastung durch Gaspulsation. Dies lässt erkennen, dass gerade die Verbindungsbereiche der einzelnen Komponenten (Blechfolien, Gehäuse,...) eines solchen Wabenkörpers miteinander besonders hohen Belastungen ausgesetzt sind und den sich ständig ändernden thermischen und/oder dynamischen Belastungen nach Möglichkeit sehr lange entsprechen sollten.

Es sind Verbindungstechniken bekannt, bei denen Lot (als Lotfolie, Lotpulver und/oder Lotpaste) in bestimmten Zonen eines solchen Wabenköpers positioniert wird, um die metallischen Komponenten miteinander zu verbinden. Zwischen dem Gehäuse und den Blechfolien des Wabenkörpers werden regelmäßig streifenartige, umlaufende Zonen gebildet, wobei diese sich über einen Teil oder die gesamte axiale Länge des Wabenkörpers bzw. des Gehäuses erstrecken können. Zur Verbindung der Blechfolien miteinander kann ebenfalls als bekannt angesehen werden, dass diese über den gesamten Querschnitt in einem axialen Teilbereich des Wabenkörpers miteinander verbunden sind. Zusätzlich und/oder alternativ dazu ist auch möglich, (stirnseitig gesehen) Zonen zu bilden, die eine Vielzahl von Kanälen umfassen, in denen eine Verbindung ausgeführt ist. So lassen sich stirnseitige Muster, beispielsweise nach Art von konzentrischen Ringen, Streifen, Dreiecken und dergleichen, erzeugen.

Ein solcher Wabenkörper ist aus der DE 10 2004 058285 A1 bekannt.

Auch wenn es zum Design eines solchen Lötbildes bereits eine Vielzahl unterschiedlicher Vorschläge gegeben hat, so können diese jedoch im Hinblick auf die Dauerhaltbarkeit nicht allen derzeit herrschenden Bedingungen im Abgassystem eines Kraftfahrzeuges standhalten.

Hiervon ausgehend ist es Aufgabe der vorliegenden Erfindung, die mit Bezug auf den Stand der Technik geschilderten Probleme zumindest teilweise zu lösen. Insbesondere soll ein Wabenkörper angegeben werden, der bei den extremen thermischen und dynamischen Beanspruchungen im Abgassystem eines Automobils eine deutlich verbesserte Lebensdauer hat. Dabei sollen insbesondere die Verbindungsstellen der Blechfolien miteinander für eine längere Lebensdauer ausgelegt sein. Der Wabenkörper soll sich zusätzlich durch ein deutlich verbessertes Thermoschock-Verhalten und ein verbessertes Schwingungsverhalten auszeichnen.

Diese Aufgaben werden gelöst mit einem Wabenkörper gemäß den Merkmalen des Patentanspruchs 1. Weitere vorteilhafte Ausgestaltungen des Wabenkörpers sind in den abhängig formulierten Patentansprüchen angegeben. Es ist darauf hinzuweisen, dass die in den Patentansprüchen einzeln angeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und gibt zusätzliche besonders bevorzugte Ausführungsvarianten der Erfindung an.

Der erfindungsgemäße Wabenkörper hat eine Vielzahl von Kanälen und ist mit zumindest einer wenigstens teilweise strukturierten Blechfolie gebildet. Die Blechfolie hat eine Verlaufsrichtung und mit sich selbst oder zumindest einer weiteren glatten Blechfolie oder strukturierten Blechfolie oberseitige Verbindungsstellen und unterseitige Verbindungsstellen. Weiter definieren zumindest oberseitige Verbindungsstellen oder unterseitige Verbindungsstellen eine gekrümmte Verbindungslinie, wobei zwischen den jeweiligen Verbindungsstellen der gekrümmen Verbindungslinie Dehnungsfugen gebildet sind.

Im Hinblick auf die Anzahl der Kanäle ist bevorzugt, dass der Wabenkörper mit einer Kanaldichte pro Quadrat-Inch (cpsi) im Bereich von 100 bis 1.000, insbesondere von 200 bis 600, ausgeführt ist. Bevorzugt ist weiter, dass mehrere glatte und strukturierte (z. B. gewellte) Blechfolien zur Herstellung des Wabenkörpers eingesetzt werden. Auch wenn solche Blechfolien beispielsweise spiralförmig aufgewickelt werden können, so ist jedoch bevorzugt, dass die Blechfolien einen hiervon abweichenden Verlauf aufweisen, beispielsweise S-förmig, V-förmig, W-förmig, U-förmig oder dergleichen. Die Anordnung der Blechfolien zueinander erfolgt dann so, dass diese letztendlich gleichmäßig den (runden, ovalen oder ähnlichen) Querschnitt des Wabenkörpers ausfüllen. Diese Blechfolien sind nun an diversen Positionen miteinander verbunden, so genannte Verbindungsstellen. Hierbei handelt es sich bevorzugt um eine Lötverbindung, insbesondere um eine Hochtemperatur-Vakuum-Lötverbindung. Damit ist auch klar, dass sich die Verlaufsrichtung regelmäßig auf den fertig gestellten (gewickelten bzw. gewundenen) Wabenkörper bezieht.

Zur Ausgestaltung der verschiedenen Verbindungsstellen ist anzumerken, dass die strukturierte Blechfolie eine flächige Ausdehnung hat, wobei diese beiden Flächen als Oberseite und Unterseite angesehen werden können. Entweder sind nur auf der Oberseite oder der Unterseite Verbindungsstellen vorgesehen, regelmäßig werden aber sowohl auf der Oberseite und der Unterseite Verbindungsstellen vorgesehen sein. Da die benachbarten Blechfolienabschnitte über diese Seiten miteinander fügetechnisch verbunden werden, wird der Zusammenhalt verwirklicht. Die Anordnung der unterseitigen und/oder oberseitigen Verbindungsstellen erfolgt nun dermaßen, dass der Wabenkörper (im gewickelten und/oder gewundenen Zustand) wenigstens eine, bevorzugt überwiegend und insbesondere nur gekrümmte Verbindungslinien bildet. Diese Verbindungslinien sind insbesondere nach Art einer Rippe, einer Sichel, eines Bogens oder dergleichen ausgeführt. Die Anordnung der wenigstens einen Verbindungslinie einer Art von Verbindungsstellen ist bevorzugt so, dass diese sich maximal mit einem Ende hin bis zum Rand des Wabenkörpers erstreckt. Bevorzugt ist, dass diese wenigstens eine Verbindungslinie (betrachtet man den Querschnitt des Wabenkörpers) weder eine zentrale Achse des Wabenkörpers noch den Rand des Wabenkörpers kontaktiert. Die Krümmung der Verbindungslinie kann über deren Erstreckung verschieden sein, bei wenigstens einer Verbindungslinie wird jedoch ein Krümmungsradius als vorteilhaft angesehen, der größer als der Radius des Wabenkörpers selbst ist. In besonderen Fällen kann es auch möglich sein, dass sich die Verbindungslinien schneiden, z. B. die der oberseitigen Verbindungsstellen mit denen der unterseitigen Verbindungsstellen.

Die Verbindungslinien selbst stellen jedoch keine starre Anbindung der Blechfolienabschnitte dar, sondern deren Ersteckung kann im Betrieb aufgrund der Dehnungsfugen zwischen den Verbindungsstellen variieren. Die Dehnungsfugen stellen somit insbesondere Liniensegmente dar, in denen keine Verbindung der benachbarten Blechfolienabschnitte vorgesehen ist, die sich also ggf. voneinander entfernen können und eine vergrößerte Zelle bilden können. Bevorzugt ist, dass die auf einer Verbindungslinie angeordneten Verbindungsstellen und Dehnungsfugen abwechselnd vorgesehen sind, wobei der Anteil der Dehnungsfugen im Hinblick auf die gesamte Erstreckung der Verbindungslinie vorteilhafter Weise überwiegt (im gewickelten bzw. gewundenen Zustand des Wabenkörpers betrachtet).

Zur Klarstellung sei darauf hingewiesen, dass tatsächlich keine "durchgängige" Linie hier vorliegt, sondern die hier angegebene "Verbindungslinie" eine (geometrische bzw. imaginäre) Verbindung von einer (tatsächlichen) Schar Verbindungspunkte ist. Die regelmäßig geringe Anzahl der Verbindungspunkte lässt die Verbindungslinie für den Fachmann leicht erkennen. Ganz besonders bevorzugt ist zu prüfen, dass alle (internen) Verbindungsstellen (genau also nur) eine Verbindungslinie definieren. Selbstverständlich sollen Toleranzen hier gleichwohl erlaubt sein, die z. B. aus einer Deformation der Blechfolien oder einer ungenauen Herstellung von Verbindungspunkten resultieren. Unbeachtet sollen regelmäßig auch die Verbindungsfehlstellen bleiben, die keinen relevanten Einfluss auf das flexible Verhalten des (ansonsten) erfindungsgemäß verwirklichten Wabenkörpers haben.

Weiter wird ein Wabenkörper der Gestalt vorgeschlagen, dass für jede Radialrichtung des Wabenkörpers gilt, dass zumindest eine gekrümmte Verbindungslinie, bestehend aus oberseitigen Verbindungsstellen, und zumindest eine gekrümmte Verbindungslinie, bestehend aus unterseitigen Verbindungsstellen, vorgesehen ist. Das heißt mit anderen Worten insbesondere, dass man bei jedem radialen Weg von der zentralen Achse des Wabenkörpers bis hin zum Rand wenigstens einmal eine gekrümmte Verbindungslinie aus oberseitigen Verbindungsstellen und eine gekrümmte Verbindungslinie aus unterseitigen Verbindungsstellen quert. Bevorzugt gibt es zumindest einen Umfangssektor des Wabenkörpers, bei dem mehr als zwei Verbindungslinien gekreuzt werden, insbesondere bis zu vier Verbindungslinien, wobei diese ganz besonders bevorzugt abwechselnd aus oberseitigen Verbindungsstellen und unterseitigen Verbindungsstellen bestehen.

Darüber hinaus ist auch vorteilhaft, dass bei dem Wabenkörper alle benachbarten Verbindungslinien zueinander einen konstanten Abstand in Verlaufrichtung haben. Damit kann der Fertigungsaufwand gleichermaßen gering gehalten und dennoch eine hohe Flexibilität des Wabenkörpers erreicht werden. Damit ist insbesondere auch gemeint, dass die oberseitigen bzw. unterseitigen Verbindungsstellen alle den gleichen Abstand zur nächsten Verbindungsstellen der Blechfolie in Verlaufrichtung haben.

Weiterhin wird auch bevorzugt, dass der Wabenkörper eine Mehrzahl von Verbindungslinien aufweist, für die wenigstes teilweise zumindest eine der folgenden Eigenschaften gilt:
- die Krümmung von wenigstens zwei Verbindungslinien sind voneinander verschieden,
- die Krümmung wenigstens einer Verbindungslinie variiert über eine Erstreckung der Verbindungslinie,
- die Mehrheit der Verbindungslinien, die durch Verbindungsstellen begrenzt sind, verlaufen versetzt zu einem Rand und einer Achse des Wabenkörpers;
- Verbindungslinien an gegenüberliegenden Stirnseiten des Wabenkörpers sind deckungsungleich,
- Verbindungslinien, die von oberseitigen Verbindungsstellen definiert sind, unterscheiden sich zumindest hinsichtlich Lage, Krümmung oder Erstreckung von denen, die von unterseitigen Verbindungsstellen definiert sind.

Bevorzugt liegen zumindest zwei oder sogar drei der obigen Eigenschaften zusammen vor. Die Krümmung betrifft dabei insbesondere einen (lokal gemittelten) Krümmungsradius der Verbindungslinie. Die "Deckungsungleichheit" der Verbindungslinien betrifft insbesondere die Ausgestaltung, bei der die Verbindungsstellen nur nahe den beiden Stirnseiten ausgeführt sind, wie das nachfolgend im Detail noch erläutert wird. Damit ist insbesondere gemeint, dass in Richtung der Achse des Wabenkörpers zumindest andere Lage, Krümmung oder Erstreckung der Verbindungslinie vorliegt. Ganz besonders bevorzugt ist, dass Lage, Krümmung und Erstreckung verschieden sind.

Bei diesem Wabenkörper wird nun insbesondere vorgeschlagen, dass die Blechfolien (in endgültiger also montierter Lage) in Verlaufsrichtung betrachtet, also beispielsweise entlang der S-Form, Verbindungsstellen mit jeweils einem Abstand von zueinander mindestens 20 mm aufweisen. In bevorzugten Ausführungsvarianten liegt der Abstand sogar bei zumindest 60 mm oder sogar 90 mm. Der Abstand sollte dabei vorteilhafter Weise allerdings im Regelfall nicht größer als 150 mm gewählt werden. Der "Abstand" ist dabei die Distanz zwischen zwei benachbarten Verbindungsstellen, die von einer Blechfolie hin zur gleichen anderen Blechfolie ausgeführt sind - also nur einseitig betrachtet (nur Oberseite bzw. nur Unterseite). Dies führt letztendlich dazu, dass die Verbindungsstellen zwischen zwei direkt benachbarten Blechfolien relativ weit auseinander liegen, und somit, insbesondere die strukturierte Blechfolie, unterschiedliches Verhalten der benachbarten Blechfolien kompensieren können.

In Anlehnung an die Orientierung bzw. den Verlauf der Blechfolien im Wabenkörper ist bevorzugt gleichermaßen zu berücksichtigen, dass in einer radialen Richtung des Wabenkörpers keine direkt angrenzenden Verbindungsstellen bzw. Verbindungslinien ausgeführt sind. Das heißt mit anderen Worten insbesondere, dass die Verbindungsstellen benachbarter Blechfolien in radialer Richtung nicht hintereinander liegend sondern zueinander beabstandet angeordnet sind, also benachbarte Blechfolien dazwischen Kontaktbereiche ohne Verbindungsstellen bilden, wo die Blechfolien (nur) aneinander anliegen (Dehnungsfugen innerhalb der Verbindungslinien und/oder Dehnungszonen zwischen den Verbindungslinien). Diese Konstruktion ist zumindest in 85 % aller möglichen Radialrichtungen (360°) ausgehend vom Zentrum vorteilhafter Weise über die gesamte Erstreckung des Wabenkörpers vom Zentrum bis hin zum Gehäuse verwirklicht, bevorzugt ist dies sogar bei mehr als 95 % oder sogar mehr 99 % der Radialrichtungen erfüllt. Um diese zusätzliche Bedingung zu erfüllen, muss ggf. der Abstand der Verbindungsstellen entsprechend angepasst sein, so dass der Abstand im Regelfall in einer Lage nicht konstant ist.

Gemäß einer Weiterbildung ist der Wabenkörper mit einer Anzahl strukturierter Blechfolien und glatter Blechfolien aus zumindest einem Stapel gebildet, der gewunden oder gewickelt in mehreren Lagen angeordnet ist und so den Wabenkörper bildet, wobei die angrenzenden Lagen in Radialrichtung wechselweise Verbindungsstellen aufweisen. Mit anderen Worten bedeutet dies, dass eine Lage mit einer glatten und einer strukturierten Blechfolie gebildet ist. Betrachtet man nun eine (innerhalb des Stapels angeordnete) strukturierte Blechfolie, so ist diese einerseits mit der glatten Blechfolie der eigenen Lage und andererseits mit einer angrenzenden glatten Blechfolie der benachbarten Lage in Kontakt. Hier wird nun vorgeschlagen, dass die Verbindungsstelle wechselweise hin zu einer der glatten Blechfolien ausgeführt ist (also wechselweise oberseitige und unterseitige Verbindungsstellen). Der Abstand wird dabei wiederum zwischen den beiden Verbindungsstellen bestimmt, die zur selben Blechfolie hin ausgebildet sind (Oberseite oder Unterseite der Blechfolie). Die wechselweise Positionierung der Verbindungsstellen erlaubt, dass sich die benachbarten Blechfolien in besonders großem Umfang zueinander bewegen können, und zwar einerseits in Verlaufsrichtung aber auch gleichzeitig radial dazu bzw. quer zu ihrer Verlaufsrichtung. Dieses hohe Maß an Bewegungsflexibilität unterstützt das interne Verformungsverhalten eines solchen Wabenkörpers im Einsatz und reduziert deutlich die Belastungen auf die Verbindungsstellen selbst.

Darüber hinaus wird hier weiter vorgeschlagen, dass die Verbindungsstelle mit maximal zwei Lötverbindungen an in Verbindungsrichtung aneinander angrenzenden Strukturextrema ausgeführt ist. In einem ganz besonders bevorzugten Fall umfasst jede bzw. die Mehrzahl der Verbindungsstellen in einem Wabenkörper jedoch nur genau eine einzelne Lötverbindung, so dass ausgehend von diesem einzelnen Strukturextrema der Abstand in beide Richtungen des Verlaufs der Blechfolie vorgesehen ist. Bei der Bereitstellung von nur genau einer einzelnen Lötverbindung ist demnach die Verbindungslinie dünner als bei der Variante mit zwei Lötverbindungen. Die Bereitstellung von zwei Lötverbindungen stellt lediglich eine Sicherheit dar, z. B. für den Fall, dass fertigungstechnische Toleranzen die genaue Positionierung jeder Lötstelle nicht gewährleisten. Wenn sich jedoch aus fertigungstechnischer Sicht die Bereitstellung genau einer einzelnen Lötverbindung zur Herstellung einer Verbindungsstelle sicherstellen lässt, ist dies für die Belastbarkeit und damit für die verbesserte Dauerhaltbarkeit ausreichend. Insbesondere bilden die zwei Lötverbindungen in Verlaufsrichtung zusammen (ohne die dazwischen liegende Distanz) eine Verbindungsstelle von höchstens 3 mm, insbesondere sogar nur 1,8 mm. Die Verbindungsstelle einer einzelnen Lötverbindung in Verlaufsrichtung entspricht dabei bevorzugt ca. 30 % bis 50 % der größten Kanalbreite in Verlaufsrichtung der Blechfolie.

Einer weiteren Ausgestaltung des Wabenkörpers zufolge hat die zumindest eine wenigstens teilweise strukturierte Blechfolie eine Struktur mit Erhebungen und Senken, wobei die Verbindungsstellen in Verlaufsrichtung wechselweise außen an den Erhebungen und Senken ausgeführt sind. Ganz besonders bevorzugt ist, dass die Verbindungsstellen jeweils an einer Erhebung bzw. einer Senke als flankierende Streifen ausgebildet sind, also insbesondere die Mitte der Erhebung und/oder Senke ohne eine Verbindung ausgeführt ist und praktisch direkt an der benachbarten Blechfolie anliegt. Damit sind insbesondere die Zwickel der benachbarten und miteinander in Kontakt stehenden Blechfolien im Wesentlichen mit Lotmaterial ausgefüllte Lötbereiche. Diese beiden Lötbereiche an einer einzelnen Erhebung oder Senke werden als eine Lötverbindung bezeichnet.

Gerade in diesem Zusammenhang wird als vorteilhaft erachtet, dass der Abstand zwischen den Verbindungsstellen in Verlaufsrichtung mindestens 15 Strukturextrema umfasst. Das heißt mit anderen Worten: Für den Fall, dass eine Verbindungsstelle an einer Erhebung (an der Oberseite) vorgesehen ist, dass die benachbarten 15 Erhebungen nun ohne eine entsprechende Verbindungsstelle ausgeführt sind, insbesondere die benachbarten 20 Strukturextrema oder sogar noch mehr. Es ist auch bevorzugt, dass alle Verbindungsstellen in einem Wabenkörper zwischen strukturierten und glatten Blechfolien dieser Regel folgen - ggf mit Ausnahme einen Rand- und/oder Zentrumsbereich des Wabenkörpers. Ungeachtet davon kann auf einer benachbarten Senke (an der Unterseite) in kürzerer Entfernung eine Verbindungsstelle hin zu einer anderen Blechfolie vorgesehen sein. Bevorzugt ist, dass die Positionierung der Verbindungsstellen an den Erhebungen und Senken in etwa mittig zueinander ausgerichtet sind, wobei dies unter Umständen so anzupassen ist, dass gleichzeitig in einer Radialrichtung des gewundenen bzw. gewickelten Wabenkörpers keine direkt angrenzenden Verbindungsstellen vorgesehen sind.

Darüber hinaus wird ein Wabenkörper vorgeschlagen, wobei zwischen den Verbindungsstellen wenigstens in Verlaufsrichtung oder in Richtung einer Achse des Wabenkörpers zumindest teilweise Verbindungsbehinderungsmittel vorgesehen sind. Damit soll insbesondere gewährleistet werden, dass die Lötverbindungen tatsächlich nur in den gewünschten Bereichen generiert werden, ein Verlaufen des Lotes in unerwünschte Bereiche hinein also vermieden wird. So kann zumindest eine der Blechfolien und/oder das Gehäuse mit einer Passivierungsschicht versehen sein, die das Anhaften von Lot und/oder von Haftmittel zur Positionierung des Lots behindert. Hierfür kommen insbesondere keramische Beschichtungen und/oder Oxide des Metalls der Blechfolie und/oder des Gehäuses in Betracht. So kann gleichermaßen die Blechfolie auch voroxidiert sein, bevor diese dem Herstellungsprozess für den Wabenkörper zugeführt wird. Ganz besonders bevorzugt ist dabei, dass (nur) jede glatte Blechfolie (gegebenenfalls beidseits) eine Oberschicht aus Aluminiumoxid aufweist. Lediglich im Bereich der gewünschten Verbindungsstellen wird eine Anbindung mittels Lot ermöglicht (z. B. durch teilweises Entfernen der Oxidschicht und/oder einer für die teilweise Anbindung mit Lot geeigneten Struktur des Verbindungsverhinderungsmittels). Dieses Verbindungsbehinderungsmittel dient zudem auch dazu, dass sich zwischen den gewünschten Verbindungsstellen keine Diffusionsverbindungen ausbilden, die das gewünschte Verhalten des Wabenkörpers im Einsatz signifikant beeinflussen.

Für eine weitere Erhöhung der Flexibilität und ein verbessertes Thermoschockverhalten wird auch vorgeschlagen, dass die Verbindungsstellen in einer Kanalerstreckungsrichtung eine Weite von höchstens 15 mm aufweisen. Damit ist insbesondere gemeint, dass die Verbindungsstellen nur nahe (z. B. mit einer Distanz zur Kante von maximal 3 mm, insbesondere von maximal nur 1 mm) den Stirnseiten des Wabenkörpers ausgebildet sind. Bevorzugt hat jede Verbindungsstelle demnach eine Weite von höchstens 15 mm, bevorzugt sogar weniger als 7 mm oder sogar weniger als 3 mm. Demnach ist bevorzugt, dass eine Blechfolie an ihren beiden Stirnseiten jeweils an dem gleichen Strukturextrema einseitig und/oder wechselseitig Verbindungsstellen bildet. Damit kann insgesamt eine axiale Weite von höchstens 30 mm vorgesehen sein, bevorzugt liegt diese gesamte Weite (Addition der Weiten in den jeweiligen stirnseitigen Bereichen desselben Kanals) jedoch unter 12 mm. Das heißt mit anderen Worten auch, dass die Blechfolien im dazwischen liegenden Bereich, der beispielsweise mehr als 80 % der Länge des Wabenkörpers ausmacht, vollständig unverbunden aneinander anliegt, also insbesondere unverlötet ist.

Darüber hinaus wird auch als vorteilhaft erachtet, dass der Wabenkörper eine Länge in Richtung einer Achse hat und die Verbindungsstellen nur in einem Bereich des Wabenkörpers von höchstens 20 % der Länge, ausgehend von zumindest einer Stirnseite, angeordnet sind. Ganz besonders bevorzugt ist, dass die Verbindungsstellen nahe beiden Stirnseiten angeordnet sind, wobei beide Bereiche zusammen höchstens 20 % der Länge ausmachen.

Es hat sich herausgestellt, dass eine solche Wabenstruktur stromeintrittsseitig durch positiven Thermoschock und stromaustrittsseitig durch negativen Thermoschock beansprucht wird. Das bedeutet insbesondere, dass der positive Thermoschock dort radiale Druckspannungen erzeugt, die aufgrund der verteilten Anordnung der Lötstellen beispielsweise gut durch Torsion der Blechfolien kompensiert werden können. Auf der Austrittsseite überwiegen andererseits beispielsweise radiale Zugspannungen, die ebenfalls mit dem hier vorgeschlagenen Lötbild gut kompensieren werden können. Ungeachtet dessen kann der mindestens eine axiale Teilbereich bzw. Querschnitt, umfassend die Verbindungsstellen, auch an anderen Positionen, z. B. im Bereich der axialen Mitte der Wabenstruktur, vorgesehen sein.

Eine sichere Anbindung der hochflexiblen Wabenstruktur mit dem Gehäuse kann dadurch erreicht werden, dass die Wabenstruktur mittels aller metallischen Lagen und über die gesamte Erstreckung der Wabenstruktur mit dem Gehäuse verbunden ist. Ganz besonders bevorzugt ist, dass alle metallischen Lagen mit ihren jeweils beiden Enden an dem Gehäuse anliegend angeordnet sind und somit über die gesamte Erstreckung dieser Enden mit dem Gehäuse, bevorzugt mit einer Lötverbindung, verbunden sind.

Zum Einsparen von Lotmaterial zur Anbindung der metallischen Lagen an das Gehäuse könnte z. B. auch ein umlaufendes Streifenmuster vorteilhaft sein, bei dem also die Wabenstruktur mittels aller metallischen Lagen, aber nur einen Teil der gesamten Erstreckung der Wabenstruktur mit dem Gehäuse verbunden ist. Insbesondere können umlaufende Streifen im Bereich der Stirnseiten und/oder der axialen Mitte vorteilhaft sein, wobei bevorzugt eine Breite von 5 mm bis 10 mm vorgeschlagen wird. Ganz besonders bevorzugt ist, dass die Breite in Abhängigkeit von der axialen Erstreckung der Wabenstruktur gewählt wird, z. B. in einem Bereich von 5 % bis 30 % der Erstreckung.

Ganz besonders bevorzugt ist weiter, dass - betrachtet man den Querschnitt des Wabenkörpers in diesem Längsabschnitt - eine Vielzahl von Kontaktpunkten der Blechfolie(n) gebildet sind, wobei höchstens 20 % dieser Kontaktpunkte (z. B. alle Kontaktpunkte zwischen Erhebungen/Senken der strukturierten Blechfolie mit der glatten Blechfolie) verbunden sind, insbesondere sogar höchstens 10 % oder sogar nur 5 %.

Gemäß einer vorteilhaften Weiterbildung ist ein Gehäuse vorgesehen und der Wabenkörper ist mit zumindest einem S-förmig gewundenen Stapel einer Anzahl strukturierter Blechfolien und glatter Blechfolien gebildet, wobei weiter alle Blechfolien mit ihren beiden Enden am Gehäuse innen anliegen und in einem Abschnitt in Richtung einer Achse des Wabenkörpers mit dem Gehäuse verbunden sind. Hierbei wird in besonderem Maße die S-förmige Verlaufsrichtung der Blechfolien als vorteilhaft vorgeschlagen, da so alle Enden der Blechfolien am Gehäuse anliegen können. Da hier nun eine sichere Verbindung mit dem Gehäuse erfolgt, insbesondere über einen Abschnitt, der mindestens 80 % der Länge des Gehäuses ausmacht, ist die Fixierung des Wabenkörpers im Gehäuse selbst gesichert. Damit sind die Enden der Blechfolien starr und dauerhaft am Gehäuse fixiert, eine Kompensation des unterschiedlichen thermischen und dynamischen Verhaltens der Blechfolien kann aber intern durch entsprechendes Verschieben der Blechfolien zueinander gewährleistet werden.

Besonders bevorzugt findet ein solcher Wabenkörper Einsatz in einer Abgasbehandlungseinheit, insbesondere in der eines Kraftfahrzeuges.

Besonders bevorzugte Ausführungsvarianten der Erfindung sowie das technische Umfeld werden nun anhand der Figuren näher erläutert. Es ist darauf hinzuweisen, dass die in den Figuren gezeigten Ausführungsbeispiele die Erfindung nicht beschränken sollen. Es zeigen schematisch:
- Fig. 1:: ein Kraftfahrzeug mit einem Abgassystem,
- Fig. 2:: einen Querschnitt durch eine Ausführungsvariante eines Wabenkörpers,
- Fig. 3:: ein erstes Detail eines Stapels für einen erfindungsgemäßen Wabenkörper,
- Fig. 4:: ein weiteres Detail einer anderen Ausführungsvariante eines Stapels für einen Wabenkörper, und
- Fig. 5:: eine stirnseitige Draufsicht auf eine Ausführungsform eines erfindungsgemäßen Wabenkörpers.

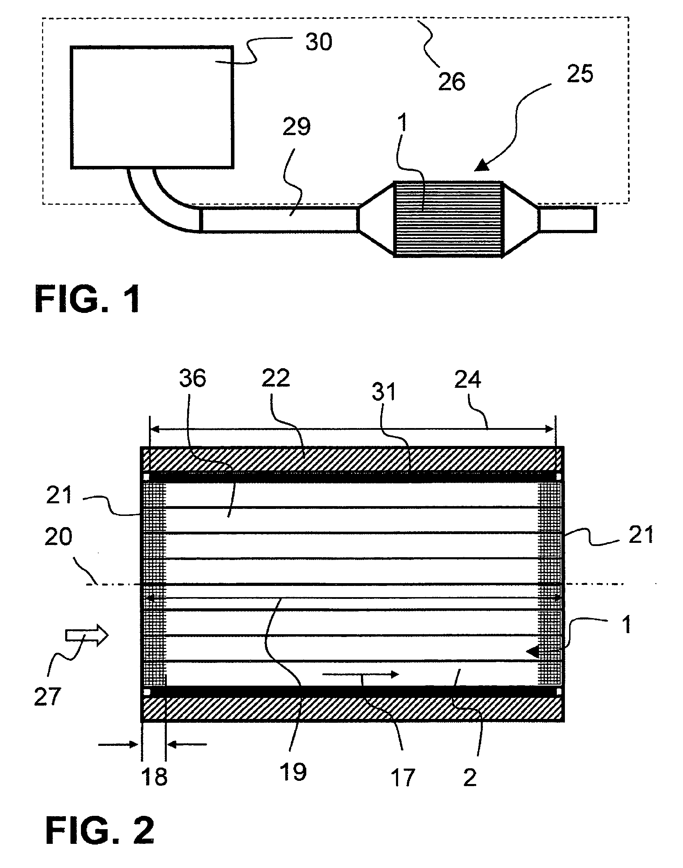

Fig. 1 veranschaulicht schematisch den Aufbau eines mobilen Abgassystems für ein Kraftfahrzeug 26. Das Kraftfahrzeug 26 hat eine Verbrennungskraftmaschine 30, beispielsweise einen Otto- oder Dieselmotor. Der dort verbrannte Brennstoff wird als Abgas durch eine entsprechende Abgasleitung 29 hin zu einer Abgasbehandlungseinheit 25 geführt. Dort werden die im Abgas enthaltenen Schadstoffe zumindest teilweise konvertiert, so dass schließlich nur relativ unschädliche Abgaskomponenten in die Umgebung strömen. Es ist offensichtlich, dass die Anzahl, Art und/oder Position solcher Abgasbehandlungseinheiten 25 in einem solchen Abgassystem in vielerlei Hinsicht variiert werden kann, folglich wird hier nur exemplarisch eine mögliche Ausgestaltung für einen erfindungsgemäßen Wabenkörper 1, der dort in der Abgasleitung 29 veranschaulicht ist, dargestellt.

Der Aufbau eines Wabenkörpers 1 geht beispielsweise aus der Fig. 2 hervor. Gezeigt ist ein Querschnitt durch einen (runden) Wabenkörper 1 entlang seiner Achse 20. Der Wabenkörper 1 ist außen begrenzt mit einem Gehäuse 22, das insbesondere als metallisches Rohr ausgeformt ist. Im Inneren dieses Gehäuses 22 ist der Wabenkörper 1 mit einer Vielzahl von Kanälen 2 gebildet. Die (separaten, voneinander zumindest teilweise getrennten) Kanäle 2 erstrecken sich zwischen den beiden Stirnseiten 21 und sind im Wesentlichen parallel zueinander angeordnet. Die Kanalerstreckungsrichtung 17 ist dabei im Wesentlichen parallel zur Achse 20, und zwar über die gesamte Länge 19 des Wabenkörpers 1. Dies muss selbstverständlich so nicht der Fall sein, insbesondere können auch andere Kanalerstreckungsrichtungen 17 vorgesehen sein. Auch müssen die Kanalwände nicht geradlinig verlaufen, es können auch in Richtung der Achse Profilierungen sein (z. B. Leitflächen) und/oder es können benachbarte Kanäle 2 verbindende Öffnungen vorgesehen sein.

Die Kanäle 2 des Wabenkörpers 1 sind regelmäßig mit einer katalytisch aktiven Beschichtung 36 versehen, so dass das hier mit der Strömungsrichtung 27 anströmende Abgas beim Hindurchströmen durch die Kanäle 2 mit dem Katalysator in Kontakt gebracht wird. Zu diesem Zweck können in bzw. mit den Kanälen 2 Verwirbelungsstellen und/oder Beruhigungszonen vorgesehen sein, die die Kontaktierung des Abgases mit der Kanalwand verbessern.

Zwischen dem Wabenkörper 1 und dem Gehäuse 22 ist nun eine Mantelverbindung 31 (bevorzugt als Lotverbindung) ausgeführt, und zwar über einen zusammenhängenden Abschnitt 24, der (fast) der Länge 19 des Wabenkörpers 1 entspricht. Damit wird insbesondere gewährleistet, dass alle zum Aufbau des Wabenkörpers 1 vorgesehenen Blechfolien sicher mit dem Gehäuse 22 verbunden sind.

Nahe den beiden Stirnseiten 21 ist jeweils schraffiert ein Verbindungsbereich veranschaulicht. Klarzustellen ist, dass, auch wenn hier der gesamte Bereich schraffiert ist, dort die Verbindungsstellen nur jeweils weit verteilt und versetzt zueinander angeordnet sind. Die Verbindungsstellen erstrecken sich dabei an einer Stirnseite 21 über eine maximale Weite 18 von höchstens 15 mm, bevorzugt aber von maximal 5 mm.

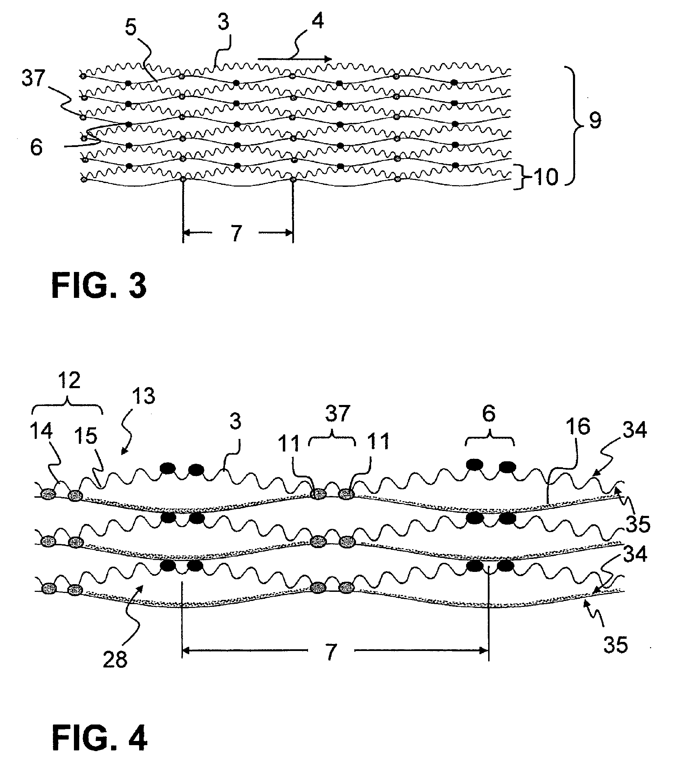

In Fig. 3 ist ein Stapel 9 mit einer Mehrzahl von Lagen 10 aus strukturierten Blechfolien 3 und glatten Blechfolien 5 gezeigt. Der Stapel 9 ist hierbei in einem noch ungewundenen Zustand dargestellt, hat also wesentlich eine geradlinige Verlaufsrichtung 4. Mit unterschiedlichen Schattierungen sind zudem die Verbindungsstellen 6 der Blechfolien zueinander dargestellt. Infolge der Tatsache, dass die Ausbildung solcher Verbindungsstellen 6 (Lötverbindungen) erst im montierten Zustand, also im gewundenen Zustand im Inneren des Gehäuses, ausgebildet werden, veranschaulicht die Fig. 3 insbesondere die Positionen für ein Haftmittel, an dem nach dem Wickelvorgang beispielsweise pulverförmiges Lot positioniert wird, welches letztendlich zur Ausbildung der hier exemplarisch und veranschaulichend dargestellten, bezogen auf die strukturierte Blechfolie 3 oberseitige Verbindungsstellen 6 und unterseitige Verbindungsstellen 37 generiert. Unten in Fig. 3 ist gezeigt, dass die gleichartigen unterseitigen Verbindungsstellen 37, hier also hin zur unteren glatten Blechfolie 5, den angegebenen Abstand 7 in Verlaufsrichtung 4 von mindestens 20 mm einhalten. Der gleiche Abstand 7 zwischen den jeweiligen Verbindungsstellen in einem Stapel führt z. B. auch dazu, dass alle benachbarten Verbindungslinien 33 zueinander einen konstanten Abstand 7 in Verlaufrichtung 4 des fertigen Wabenkörpers 1 haben. Aus der Darstellung hier kann auch entnommen werden, dass bevorzugt die (dunkler dargestellten) oberseitigen Verbindungsstellen 6 hin zur anderen (oberen) Blechfolie mittig zwischen den erstgenannten (heller dargestellten) unterseitigen Verbindungsstellen 37 positioniert sind.

Fig. 4 zeigt nun eine Variante, wobei jede Verbindungsstelle 6, 37 mit zwei Lötverbindungen 11 an benachbarten Strukturextrema 12, also entweder Erhebungen 14 oder Senken 15, ausgebildet ist. Zwischen den Verbindungsstellen 6, 37 sind eine Vielzahl von Strukturextrema 12 der Struktur 13 der strukturierten Blechfolie 3 vorgesehen. Nur sei an dieser Stelle darauf hingewiesen, dass üblicherweise die Anzahl der Strukturextrema 12 zwischen den gleichartigen (gleichfarbig dargestellt) Verbindungsstellen in Verlaufsrichtung normalerweise deutlich höher ist als das hier exemplarisch dargestellt ist, insbesondere liegen mindestens 15 Strukturextrema dazwischen.

Darüber hinaus lässt sich aus Fig. 4 erkennen, dass die glatten Blechfolien 5 mit einer Verbindungsbehinderungsschicht 16 ausgeführt sind. Auch wenn diese bevorzugt an der Oberseite 34 und der Unterseite 35 der glatten Blechfolie 5 vorgeschen ist, kann in Ausnahmesituationen auch eine einseitige Bereitstellung einer Oxidschicht genügen. Jedenfalls soll so auch gewährleistet werden, dass eine Anbindung der metallischen Blechfolien, beispielsweise infolge einer Diffusion, vermieden wird und sich folglich unter Beanspruchung relativ große Zellen 28 ausbilden können. Mit anderen Worten kann also als Bildungsgesetz festgehalten werden, dass eine solche Zelle 28 beispielsweise mit einem Abschnitt einer glatten Blechfolie 5 und einem Abschnitt einer strukturierten Blechfolie 3 gebildet ist, wobei die Zelle 28 über zwei gleichartige Verbindungsstellen (hier für unterseitigc Verbindungsstellen gezeigt) begrenzt ist und weiter die Zellenbegrenzung mittels der strukturierten Blechfolie 3 mit mindestens 15 Strukturextrema 12 gebildet ist. Damit wird eine besonders starke Verformbarkeit der Zelle 28 bzw. flexible Anordnung der benachbarten Blechfolien realisiert, und zwar einerseits in Verlaufsrichtung 4 und auch quer dazu.

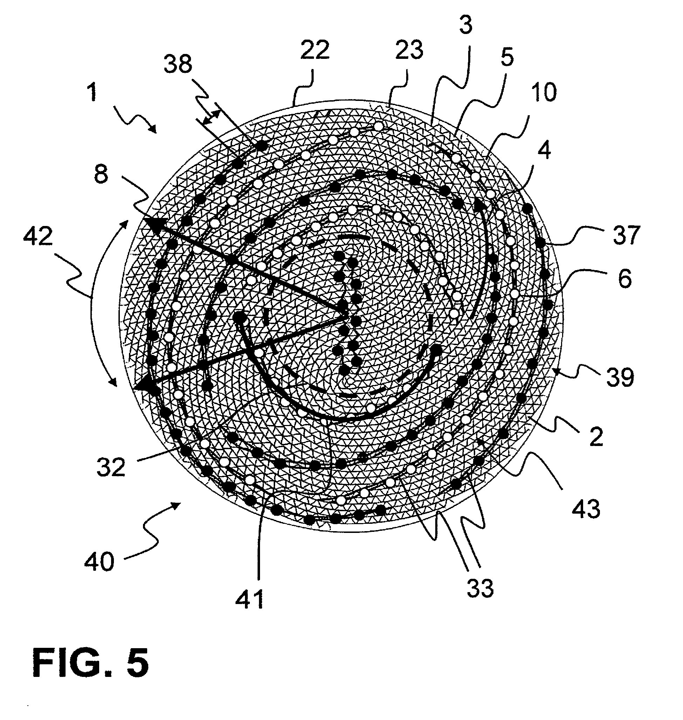

Die Fig. 5 veranschaulicht nun für ein Ausführungsbeispiel eines Wabenkörpers 1 das Lötbild als Querschnitt 40. Der Wabenkörper 1 ist mit einer Vielzahl glatter Blechfolien 5 und strukturierter Blechfolien 3 gebildet, die S-förmig angeordnet sind. Außen am Gehäuse 22, also am Rand 39, liegen nun alle Enden 23 der Lagen 10 der Blechfolien bzw. die Blechfolien selbst an. Mit den glatten und den gewellten Blechfolien ist nun die Vielzahl der Kanäle 2 gebildet.

Im Hinblick auf das Lötbild lässt sich erkennen, dass oberseitige Verbindungsstellen 6 (hier hell dargestellt) und unterseitige Verbindungsstellen 37 (hier dunkel dargestellt) jeweils eine gekrümmte Verbindungslinie 33 bilden und zwischen den jeweiligen Verbindungsstellen der gekrümmten Verbindungslinie 33 Dehnungsfugen 38 gebildet sind. Der Anteil der Dehnungsfugen 38 an der gesamten Erstreckung 41 der Verbindungslinien 33 ist dabei überwiegend, also insbesondere deutlich größer als 80 %. Weiter kann hieraus entnommen werden, dass für jede Radialrichtung 8 des Wabenkörpers 1 gilt, dass zumindest eine gekrümmte Verbindungslinie 33, bestehend aus oberseitigen Verbindungsstellen 6, und zumindest eine gekrümmte Verbindungslinie 33, bestehend aus unterseitigen Verbindungsstellen 37, vorgesehen ist. In dem hier besonders herausgestellten Umfangssektor 42 werden auf dem Weg vom Zentrum bis zum Rand 39 sogar bis zu vier Verbindungslinien 33 gekreuzt, wobei auch wechselweise verschiedenartige Verbindungslinien 33 gekreuzt werden können. Die Verbindungslinien 33 verlaufen dabei überwiegend von einem Punkt nahe des Zentrumsbereiches 32 hin zum Rand 39, wobei nicht der Radialrichtung 8 gefolgt wird.

Fig. 5 macht auch klar, dass in Radialrichtung 8 des Wabenkörpers 1 keine direkt angrenzenden Verbindungsstellen 6, 37 bzw. Verbindungslinien 33 ausgeführt sind. Zwischen den Verbindungslinien 33 sind in Radialrichtung 8 gesehen Dehnungszonen 43 gebildet, die eine Relativbewegung der zwischen den Verbindungslinien 33 angeordneten Blechfolienabschnitte zueinander erlaubt (verbindungsfreie Zone). In einem Zentrumsbereich 32 sind (gegenüber einem äußeren Ringbereich) relativ wenige Verbindungsstellen ausgebildet. Im Hinblick auf die Markierung der Verbindungsstellen ist anzumerken, dass die schwarzen Punkte, beispielsweise die Verbindungsstellen hin zur Oberseite (oberseitige Verbindungsstellen 6), und die weißen Punkte Verbindungsstellen hin zur Unterseite (unterseitige Verbindungsstellen 37) der strukturierten Blechfolie 3 (die regelmäßig als Referenz herangezogen wird) kennzeichnen. Die jeweiligen Verbindungsstellen in einem Stapel bilden im gewundenen Zustand Verbindungslinien 33 aus, wobei hier klar erkennbar ist, dass in Radialrichtung 8 des Wabenkörpers jeweils keine direkt angrenzenden Verbindungsstellen vorgesehen sind, sondern dass dazwischen immer wieder Blechfolien ohne Verbindungsbereiche angeordnet sind. In Radialrichtung 8 wechseln sich dabei die oberseitigen Verbindungsstellen 6 und unterseitigen Verbindungsstellen 37 ab. Bei der hier dargestellten Variante sind lediglich 20 % aller möglichen Kontaktstellen zwischen strukturierter Blechfolie 3 und glatter Blechfolie 5 miteinander verbunden. Betrachtet man die Verbindungsstellen separat (wobei jede Verbindungsstelle dann mit zwei Lötstellen gebildet ist), liegt der Verbindungsanteil sogar nur bei 10 %. Im Ergebnis lässt sich nun auch festhalten, dass nunmehr stirnseitig keine flächigen Zonen mehr verlötet werden, sondern die hier nur schematisch angedeuteten Verbindungsstellen 6, 37 jeweils sichelförmige bzw. bogenartige Verbindungslinien 33 bilden.

### Bezugszeichenliste

- 1: Wabenkörper
- 2: Kanal
- 3: strukturierte Blechfolie
- 4: Verlaufsrichtung
- 5: glatte Blechfolie
- 6: oberseitige Verbindungsstelle
- 7: Abstand
- 8: Radialrichtung
- 9: Stapel
- 10: Lage
- 11: Lötverbindung
- 12: Strukturextremum
- 13: Struktur
- 14: Erhebungen
- 15: Senken
- 16: Verbindungsbehinderungsmittel
- 17: Kanalerstreckungsrichtung
- 18: Weite
- 19: Länge
- 20: Achse
- 21: Stirnseite
- 22: Gehäuse
- 23: Ende
- 24: Abschnitt
- 25: Abgasbehandlungseinheit
- 26: Kraftfahrzeug
- 27: Strömungsrichtung
- 28: Zelle
- 29: Abgasleitung
- 30: Verbrennungskraftmaschine
- 31: Mantelverbindung
- 32: Zentrumsbereich
- 33: Verbindungslinie
- 34: Oberseite
- 35: Unterseite
- 36: Beschichtung
- 37: unterseitige Verbindungsstelle
- 38: Dehnungsfuge
- 39: Rand
- 40: Querschnitt
- 41: Erstreckung
- 42: Umfangssektor
- 43: Dehnungszone

## Patentansprüche

1. Wabenkörper (1) mit einer Vielzahl von Kanälen (2), die sich zwischen zwei Stirnseiten (21) in einer Kanalerstreckungsrichtung (17) durch den Wabenkörper (1) erstrecken, wobei der Wabenkörper (1) mit zumindest einer wenigstens teilweise strukturierten Blechfolie (3) gebildet ist, wobei die Blechfolie (3) eine Verlaufsrichtung (4) hat und mit sich selbst oder zumindest einer weiteren glatten Blechfolie (5) oder strukturierten Blechfolie (3) oberseitige Verbindungsstellen (6) und unterseitige Verbindungsstellen (37) aufweist, und weiter zumindest oberseitige Verbindungsstellen (6) oder unterseitige Verbindungsstellen (37) eine gekrümmte Verbindungslinie (33) definieren und zwischen den jeweiligen Verbindungsstellen der gekrümmten Verbindungslinie (33) Dehnungsfugen (38) gebildet sind, **dadurch gekennzeichnet dass** die Verbindungsstellen (6) nur nahe den Stirnseiten (21) ausgebildet sind und die Blechfolien (3, 5) im dazwischen liegenden Bereich vollständig unverbunden aneinander liegen, und weiter die Verbindungsstellen (6) in der Kanalerstreckungsrichtung (17) eine Weite (18) von höchstens 7 mm und eine Distanz zur Stirnseite (21) von maximal 3 mm aufweisen.

2. Wabenkörper (1) nach Patentanspruch 1, wobei der Wabenkörper (1) eine Mehrzahl von Verbindungslinien (33) aufweist, für die wenigstes teilweise zumindest eine der folgenden Eigenschaften gilt:
- die Krümmung von wenigstens zwei Verbindungslinien (33) sind voneinander verschieden,
- die Krümmung wenigstens einer Verbindungslinie (33) variiert über eine Erstreckung (41) der Verbindungslinie (33),
- die Mehrheit der Verbindungslinien (33), die durch Verbindungsstellen (6, 37) begrenzt sind, verlaufen versetzt zu einem Rand (39) und einer Achse (20) des Wabenkörpers (1);
- Verbindungslinien (33) an gegenüberliegenden Stirnseiten (21) des Wabenkörpers (1) sind deckungsungleich,
- Verbindungslinien (33), die von oberseitigen Verbindungsstellen (6) definiert sind, unterscheiden sich zumindest hinsichtlich Krümmung und/oder Erstreckung (41) von denen, die von unterseitigen Verbindungsstellen (37) definiert sind.

3. Wabenkörper (1) nach Patentanspruch 1 oder 2, wobei für jede Radialrichtung (8) des Wabenkörpers (1) gilt, dass zumindest eine gekrümmte Verbindungslinie (33), bestehend aus oberseitigen Verbindungsstellen (6), und zumindest eine gekrümmte Verbindungslinie (33), bestehend aus unterseitigen Verbindungsstellen (37), vorgesehen ist.

4. Wabenkörper (1) nach einem der vorhergehenden Patentansprüche, wobei alle benachbarten Verbindungslinien (33) zueinander einen konstanten Abstand (7) in Verlaufrichtung (4) haben.

5. Wabenkörper (1) nach einem der vorhergehenden Patentansprüche, wobei mit einer Anzahl strukturierter Blechfolien (3) und glatter Blechfolien (5) zumindest ein Stapel (9) gebildet ist, der gewunden oder gewickelt in mehreren Lagen (10) angeordnet ist und so den Wabenkörper (1) bildet, wobei die angrenzenden Lagen (10) in Radialrichtungen (8) wechselweise Verbindungsstellen (6) aufweisen.

6. Wabenkörper (1) nach einem der vorhergehenden Patentansprüche, wobei die Verbindungsstelle (6) mit maximal zwei Lötverbindungen (11) an in Verlaufsrichtung (4) aneinander angrenzenden Strukturextrema (12) ausgeführt ist.

7. Wabenkörper (1) nach einem der vorhergehenden Patentansprüche, wobei die zumindest eine wenigstens teilweise strukturierte Blechfolie (3) eine Struktur (13) mit Erhebungen (14) und Senken (15) hat, wobei die Verbindungsstellen (6) in Verlaufrichtung (4) wechselweise außen an den Erhebungen (14) und Senken (15) ausgeführt sind.

8. Wabenkörper (1) nach Patentanspruch 7, wobei der Abstand (7) zwischen den Verbindungsstellen (6) in Verlaufrichtung (4) zumindest 15 Strukturextrema (12) umfasst.

9. Wabenkörper (1) nach einem der vorhergehenden Patentansprüche, wobei zwischen den Verbindungsstellen (6) wenigstens in Verlaufrichtung (4) oder in Richtung einer Achse (20) des Wabenkörpers (1) zumindest teilweise Verbindungsbehinderungsmittel (16) vorgesehen sind.

10. Wabenkörper (1) nach einem der vorhergehenden Patentansprüche, wobei der Wabenkörper (1) eine Länge (19) in Richtung einer Achse (20) hat und die Verbindungsstellen (6) nur in einem Bereich des Wabenkörpers (1) von höchstens 20 % der Länge (19), ausgehend von zumindest einer Stirnseite (21), angeordnet sind.

11. Wabenkörper (1) nach einem der vorhergehenden Patentansprüche, wobei ein Gehäuse (22) vorgesehen und der Wabenkörper (1) mit zumindest einem S-förmig gewunden Stapel (9) einer Anzahl strukturierter Blechfolien (3) und glatter Blechfolien (5) gebildet ist, wobei weiter alle Blechfolien (3, 5) mit ihren beiden Enden (23) am Gehäuse (22) innen anliegen und in einem Abschnitt (24) in Richtung einer Achse (20) des Wabenkörpers (1) mit dem Gehäuse (22) verbunden sind.

12. Abgasbehandlungseinheit (25) aufweisend zumindest einen Wabenkörper (1) gemäß einem der vorhergehenden Patentansprüche.

13. Kraftfahrzeug (26) aufweisend zumindest eine Abgasbehandlungseinheit (25) gemäß Patentanspruch 12.

## Claims

1. A honeycomb body (1) having a multiplicity of ducts (2), which extend between two end sides (21) in a duct direction of extent (17) through the honeycomb body (1), wherein the honeycomb body (1) is formed with at least one at least partially structured sheet-metal foil (3), wherein the sheet-metal foil (3) having a profile direction (4) and having top-side connecting points (6) and bottom-side connecting points (37) to itself or to at least one further smooth sheet-metal foil (5) or structured sheet-metal foil (3), and also at least top-side connecting points (6) or bottom-side connecting points (37) define a curved connecting line (33) and expansion joints (38) being formed between the respective connecting points of the curved connecting line (33), **characterized in that** the connecting points (6) are formed only close to the end sides (21) and that the sheet-metal foils (3, 5) bear against one another in the interposed region entirely without connections; and that the connecting points (6) have a width (18) in the duct direction of extent (17) of at most 7 mm and a distance to the end side (21) of a maximum of 3 mm.

2. The honeycomb body (1) as claimed in claim 1, wherein the honeycomb body (1) has a multiplicity of connecting lines (33), which at least partially have at least one of the following characteristics:
- the curvatures of at least two connecting lines (33) differ from one another,
- the curvature of at least one connecting line (33) varies over an extent (41) of the connecting line (33),
- the majority of the connecting lines (33) which are delimited by connecting points (6, 37) run offset with respect to an edge (39) and an axis (20) of the honeycomb body (1),
- connecting lines (33) at opposite end sides (21) of the honeycomb body (1) are non-congruent,
- connecting lines (33) which are defined by top-side connecting points (6) differ at least with regard to curvature and/or extent (41) from those defined by bottom-side connecting points (37).

3. The honeycomb body (1) as claimed in claim 1 or 2, wherein it is true for each radial direction (8) of the honeycomb body (1) that at least one curved connecting line (33) composed of top-side connecting points (6) and at least one curved connecting line (33) composed of bottom-side connecting points (37) is provided.

4. The honeycomb body (1) as claimed in one of the preceding claims, wherein all the adjacent connecting lines (33) having a constant spacing (7) to one another in the profile direction (4).

5. The honeycomb body (1) as claimed in one of the preceding claims, wherein at least one stack (9) being formed with a number of structured sheet-metal foils (3) and smooth sheet-metal foils (5), which is arranged so as to be wound or coiled into a plurality of layers (10) and thereby forms the honeycomb body (1), wherein the adjoining layers (10) in radial directions (8) alternately having connecting points (6).

6. The honeycomb body (1) as claimed in one of the preceding claims, wherein the connecting point (6) being formed with a maximum of two brazed connections (11) at structure extrema (12) which are adjacent to one another in the profile direction (4).

7. The honeycomb body (1) as claimed in one of the preceding claims, wherein the at least one at least partially structured sheet-metal foil (3) having a structure (13) with elevations (14) and depressions (15), wherein the connecting points (6) being formed alternately at the outside on the elevations (14) and depressions (15) in the profile direction (4).

8. The honeycomb body (1) as claimed in claim 7, wherein the spacing (7) between the connecting points (6) in the profile direction (4) comprises at least 15 structure extrema (12).

9. The honeycomb body (1) as claimed in one of the preceding claims, wherein connection prevention means (16) at least partially are provided between the connecting points (6) at least in the profile direction (4) or in the direction of an axis (20) of the honeycomb body (1).

10. The honeycomb body (1) as claimed in one of the preceding patent claims, wherein the honeycomb body (1) having a length (19) in the direction of an axis (20) and with the connecting points (6) being arranged in a region of the honeycomb body (1) of at most 20% of the length (19) proceeding from at least one end side (21).

11. The honeycomb body (1) as claimed in one of the preceding claims, wherein a housing (22) is provided, and the honeycomb body (1) is formed with at least one stack (9), which is wound in an S-shape, of a number of structured sheet-metal foils (3) and smooth sheet-metal foils (5), wherein all the sheet-metal foils (3, 5) furthermore bear with their two ends (23) against the housing (22) at the inside and being connected to the housing (22) in a section (24) in the direction of an axis (20) of the honeycomb body (1).

12. An exhaust-gas treatment unit (25) having at least one honeycomb body (1) as claimed in one of the preceding claims.

13. A motor vehicle (26) having at least one exhaust-gas treatment unit (25) according to claim 12.

## Revendications

1. Corps alvéolaire (1) comprenant une pluralité de canaux (2) qui s'étendent entre deux côtés frontaux (21) dans une direction d'étendue de canaux (17) à travers le corps alvéolaire (1), le corps alvéolaire (1) étant formé avec au moins une feuille en tôle (3) au moins partiellement structurée, la feuille en tôle (3) ayant une direction d'étendue (4) et présentant avec elle-même ou avec au moins une autre feuille en tôle lisse (5) ou une feuille en tôle structurée (3), des zones de liaison (6) du côté supérieur et des zones de liaison (37) du côté inférieur, et d'autres zones de liaison (6) au moins du côté supérieur ou des zones de liaison (37) du côté inférieur définissant une ligne de liaison courbe (33) et entre les zones de liaison respectives de la ligne de liaison courbe (33) étant formés des joints de dilatation (38), **caractérisé en ce que** les zones de liaison (6) sont réalisées seulement à proximité des côtés frontaux (21) et les feuilles en tôle (3, 5) se situent dans la région située entre eux l'une contre l'autre de manière complètement non assemblée, et les zones de liaison (6) présentent en outre dans la direction d'étendue des canaux (17) une largeur (18) de 7 mm au maximum et une distance au côté frontal (21) de 3 mm au maximum.

2. Corps alvéolaire (1) selon la revendication 1, dans lequel le corps alvéolaire (1) présente une pluralité de lignes de liaison (33) pour lesquelles on a au moins en partie au moins l'une des propriétés suivantes :
- les courbures d'au moins deux lignes de liaison (33) sont différentes l'une de l'autre,
- la courbure d'au moins une ligne de liaison (33) varie sur une étendue (41) de la ligne de liaison (33),
- la pluralité des lignes de liaison (33) qui sont limitées par des zones de liaison (6, 37), s'étendent de manière décalée par rapport à un bord (39) et à un axe (20) du corps alvéolaire (1) ;
- des lignes de liaison (33) sur des côtés frontaux opposés (21) du corps alvéolaire (1) ne sont pas coïncidentes,
- des lignes de liaison (33) qui sont définies par des zones de liaison (6) du côté supérieur, se distinguent au moins en termes de leur courbure et/ou de leur étendue (41) par lesquelles sont définies les zones de liaison (37) du côté inférieur.

3. Corps alvéolaire (1) selon la revendication 1 ou 2, dans lequel, pour chaque direction radiale (8) du corps alvéolaire (1), au moins une ligne de liaison courbe (33), constituée de zones de liaison (6) du côté supérieur et au moins une ligne de liaison courbe (33) constituée de zones de liaison (37) du côté inférieur, est prévue.

4. Corps alvéolaire (1) selon l'une quelconque des revendications précédentes, dans lequel toutes les lignes de liaison adjacentes (33) ont une distance constante (7) les unes des autres dans la direction d'étendue (4).

5. Corps alvéolaire (1) selon l'une quelconque des revendications précédentes, dans lequel au moins une pile (9) est formée à partir d'un certain nombre de feuilles en tôle structurées (3) et de feuilles en tôle lisses (5), la pile étant disposée sous forme ondulée ou enroulée en plusieurs couches (10), et formant ainsi le corps alvéolaire (1), les couches adjacentes (10) présentant dans la direction radiale (8) des zones de liaison (6) disposées de manière alternée.

6. Corps alvéolaire (1) selon l'une quelconque des revendications précédentes, dans lequel la zone de liaison (6) ayant au maximum deux liaisons brasées (11) est réalisée sur des extrêmes (12) de structure adjacents l'un à l'autre dans la direction d'étendue (4).

7. Corps alvéolaire (1) selon l'une quelconque des revendications précédentes, dans lequel l'au moins une feuille en tôle au moins partielle structurée (3) a une structure (13) avec des rehaussements (14) et des renfoncements (15), les zones de liaison (6) dans la direction d'étendue (4) étant réalisées en alternance à l'extérieur sur les rehaussements (14) et les renfoncements (15).

8. Corps alvéolaire (1) selon la revendication 7, dans lequel la distance (7) entre les zones de liaison (6) dans la direction d'étendue (4) comprend au moins 15 extrêmes de structure (12).

9. Corps alvéolaire (1) selon l'une quelconque des revendications précédentes, dans lequel, entre les zones de liaison (6) au moins dans la direction d'étendue (4) ou dans la direction d'un axe (20) du corps alvéolaire (1) sont prévus au moins en partie des moyens pour empêcher la liaison (16).

10. Corps alvéolaire (1) selon l'une quelconque des revendications précédentes, dans lequel le corps alvéolaire (1) présente une longueur (19) dans la direction d'un axe (20) et les zones de liaison (6) sont disposées seulement dans une région du corps alvéolaire (1) constituant au maximum 20 % de la longueur (19), à partir d'au moins un côté frontal (21).

11. Corps alvéolaire (1) selon l'une quelconque des revendications précédentes, dans lequel un boîtier (22) est prévu et le corps alvéolaire (1) est formé avec au moins une pile (9) enroulée en forme de S d'un certain nombre de feuilles en tôle structurées (3) et de feuilles en tôle lisses (5), toutes les feuilles en tôle (3, 5) s'appliquant en outre à l'intérieur avec leurs deux extrémités (23) contre le boîtier (22), et étant connectées au boîtier (22) dans une portion (24) dans la direction d'un axe (20) du corps alvéolaire (1).

12. Unité de traitement des gaz d'échappement (25) présentant au moins un corps alvéolaire (1) selon l'une quelconque des revendications précédentes.

13. Véhicule automobile (26) présentant au moins une unité de traitement des gaz d'échappement (25) selon la revendication 12.
